# EUROPEAN PATENT APPLICATION

(11) **EP 2 634 998 A1**
(43) Date of publication of application: **04.09.2013**
(21) Application number: 11835502.3
(22) Date of filing: 10.05.2011
(51) Int. Cl.: H04L 29/08

(54) **METHOD AND SYSTEM FOR DOWNLOADING REAL-TIME STREAMING MEDIA IN PEER-TO-PEER NETWORK**

(30) Priority: 28.10.2010 CN 201010528894
(71) Applicant: Huawei Technologies Co., Ltd., Shenzhen, Guangdong 518129 (CN)
(72) Inventor: GU, Yingjie, Shenzhen Guangdong 518129 (CN); YANG, Peilin, Shenzhen Guangdong 518129 (CN); ZONG, Ning, Shenzhen Guangdong 518129 (CN)
(74) Representative: Epping - Hermann - Fischer
(86) International application number: PCT/CN2011/073891
(87) International publication number: WO 2012/055228

(57) **Abstract**

The present invention provides a method and system for downloading real-time streaming media in a peer-to-peer (P2P) network, belonging to the field of communications. The system of the present invention includes a request node and a server, wherein the request node transmits a query request to a catalog server, and the query request includes: real-time streaming media requested to be downloaded and layers of the real-time streaming media requested to be downloaded, the request node receives a list of nodes capable of providing the real-time streaming media of the layers and determined by the catalog server, determines downloading nodes from the list of nodes, and downloads the real-time streaming media of the layers from the downloading nodes. In the embodiments of the present invention, the request node can transmit the layer requested to the catalog server, and the catalog server determines the downloading nodes, so that the P2P network can transmit the layered real-time streaming media in order to allow a user to determine the layers to be watched according to the condition of a terminal. The usage experience of the user is improved and the complexity of the user operation is reduced.

## Description

### Cross-Reference to Related Application

This application claims priority to Chinese Patent Application No. 201010528894.3 filed on October 28, 2010 before the State Intellectual Property Office of China and entitled "method and system for downloading real-time streaming media in peer-to-peer network", which is hereby incorporated by reference in its entirety.

### Field

The present invention relates to the field of communications, and particularly, to a method and system for downloading real-time streaming media in peer-to-peer network.

### Background

With the development of network technology, P2P network (Peer-to-Peer, peer-to-peer) has become a very popular data transmission mode. Typical P2P applications include BitTorrent for file sharing, Skype for voice, PPLive for video, etc. The P2P network has a plurality of peers (nodes). In order to realize the collaborative downloading among a lot of peers, content is divided into a plurality of chunks, and a list of peers sharing certain data is stored in an appTracker (catalog server). The peers acquire parameters such as address of the appTracker, etc. with a description file (Description File).

Streaming media files transmitted in the current Internet may have a single layer or multiple layers. The code of a single layer streaming media file has only one layer, and once the video stream of this one layer is obtained, all contents of the video can be acquired. For terminals of different bandwidths and types, a streaming media file may be divided into multiple layers, i.e., layered streaming media (Layered Streaming). Terminals having low bandwidth and low display capability may only acquire the media stream on a bottom layer (Basic Layer) where the quality of experience is poor. Terminals having high bandwidth and high display capability may acquire the media streams on an enhanced layer where the quality of experience is good. In the prior art, the enhanced layer can be decoded only if each layer therebelow is normally decoded. For example, layer 3 can be decoded only if layer 2, layer 1 and layer 0 are all normally decoded.

During the implementation of the present invention, the inventors recognize that the prior art has the following disadvantages:
In the current P2P network, the real-time streaming media are all encoded for the single layer streaming media. The single layer streaming media is not distinguished with respect to the terminals, and whether mobile devices having low bandwidth or terminal devices having high bandwidth shall download the same content. As a result, the user terminals having low bandwidth cannot smoothly watch the streaming media, and user terminals having high bandwidth cannot watch a high quality streaming media. Thus the requirements of various user terminals cannot be met, and the users' experiences become poor.

### Summary

In order to solve the problem in the prior art that the requirements of various user terminals cannot be met since the real-time streaming media are all encoded for the single layer streaming media in the P2P network, embodiments of the present invention provide a method and system for downloading real-time streaming media in a P2P network. The technical solutions are given as follows.

One aspect of the embodiments of the present invention provides a method for downloading real-time streaming media in a P2P network, including: transmitting a query request to a catalog server, the query request includes a real-time streaming media requested to be downloaded and layers of the real-time streaming media requested to be downloaded; receiving a list of nodes capable of providing the real-time streaming media and determined by the catalog server; and determining downloading nodes from the list of nodes, and downloading real-time streaming media of the layers from the downloading nodes.

Another aspect of the embodiments of the present invention provides a method for downloading real-time streaming media in a P2P network, including: receiving a query request transmitted from a request node, the query request includes a real-time streaming media requested to be downloaded and layers of the real-time streaming media requested to be downloaded; determining nodes capable of providing the real-time streaming media requested to be downloaded according to the real-time streaming media and the layers, and generating a list of nodes; and returning the list of nodes to the request node.

Still another aspect of the embodiments of the present invention provides a network node applied in a P2P network, including: a transmitter configured to transmit a query request to a catalog server, the query request includes a real-time streaming media requested to be downloaded and layers of the real-time streaming media requested to be downloaded; a receiver configured to receive a list of nodes capable of providing the real-time streaming media and determined by the catalog server; and a downloading module configured to determine downloading nodes from the list of nodes, and download the real-time streaming media of the layers from the downloading node.

A fourth aspect of the embodiments of the present invention provides a server applied in a P2P network, including: a receiver configured to receive a query request transmitted from a request node, the query request includes a real-time streaming media requested to be downloaded and layers of the real-time streaming media requested to be downloaded; a processing module configured to determine the nodes capable of providing the real-time streaming media requested to be downloaded according to the real-time streaming media and the layers, and generate a list of nodes; and a transmitter configured to return the list of nodes to the request node.

A fifth aspect of the embodiments of the present invention provides a system for downloading real-time streaming media in a P2P network, including: a request node configured to transmit a query request to a catalog server, the query request includes a real-time streaming media requested to be downloaded and layers of the real-time streaming media requested to be downloaded; receive a list of nodes capable of providing the real-time streaming media and determined by the catalog server; determine downloading nodes from the list of nodes, and download real-time streaming media of the layers from the downloading nodes; and the catalog server configured to receive a query request transmitted from the request node, the query request includes real-time streaming media requested to be downloaded and layers of the real-time streaming media requested to be downloaded; determine the nodes capable of providing the real-time streaming media requested to be downloaded according to the real-time streaming media and the layers, generate a list of nodes; and to return the list of nodes to the request node.

The embodiments of the present invention have the following beneficial effect: in the embodiments of the present invention, the request node may transmit the layers of the requested real-time streaming media to the catalog server, so that the catalog server determines the downloading nodes. Thus the P2P network can transmit the layered real-time streaming media, so as to allow a user determine the layer of the real-time streaming media to be watched according to the condition of a terminal, thereby improving the usage experience of the user. In addition, the complexity of the user's operation can be reduced by determining the downloading nodes by the server.

### Brief Description of the Drawings

In order to more clearly describe the technical solutions of the embodiments of the present invention, the drawings to be used in the descriptions of the embodiments are briefly introduced as follows. Obviously, the following drawings just illustrate some embodiments of the present invention, and a person skilled in the art can obtain other drawings from these drawings without paying any creative effort.

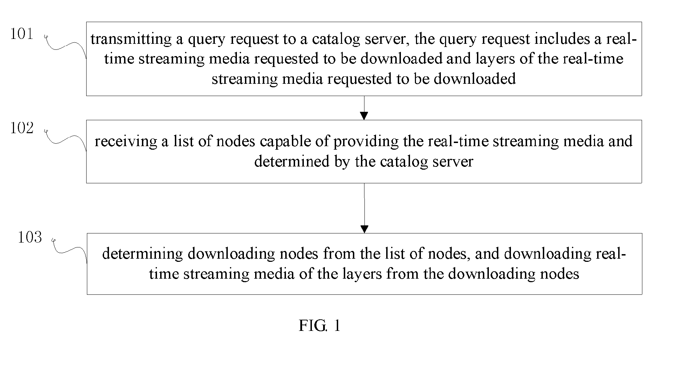

Fig. 1 is a flow diagram of a first embodiment of the present invention;
Fig. 2 is a flow diagram of a second embodiment of the present invention;
Fig. 3 is a flow diagram of a third embodiment of the present invention;
Fig. 4 is a flow diagram of a fourth embodiment of the present invention;
Fig. 5 is a structural diagram of a fifth embodiment of the present invention;
Fig. 6 is a structural diagram of a sixth embodiment of the present invention;
Fig. 7 is a structural diagram of a seventh embodiment of the present invention;
Fig. 8 is a structural diagram of an eighth embodiment of the present invention.

### Detailed Description of the Embodiments

In order that the objects, technical solutions and advantages of the present invention are clearer, the embodiments of the present invention are further detailedly described as follows with reference to the drawings.

### Embodiment one

A first embodiment of the present invention provides a method for downloading real-time streaming media in a P2P network, including:
Step 101: transmitting a query request to a catalog server, the query request includes a real-time streaming media requested to be downloaded and layers of the real-time streaming media requested to be downloaded.
Step 102: receiving a list of nodes capable of providing the real-time streaming media and determined by the catalog server.
Step 103: determining downloading nodes from the list of nodes, and downloading real-time streaming media of the layers from the downloading nodes.

Downloading the real-time streaming media from the downloading nodes includes: the request node transmits a downloading request to the downloading nodes, the downloading request includes real-time streaming media requested to be downloaded and the layers thereof, and the request node downloads the real-time streaming media of the layers after receiving acknowledge responses from the downloading nodes.

The method further includes: the request node transmits a joining request to the catalog server, to request to join a group sharing the real-time streaming media under the catalog server, the joining request includes an identifier of the real-time streaming media stored by the request node itself and layers of the real-time streaming media.

In the embodiment of the present invention, the request node may transmit the layers of the requested real-time streaming media to the catalog server, so that the catalog server determines the downloading nodes. Thus the P2P network can transmit the layered real-time streaming media, so as to allow a user to determine the layer of the real-time streaming media to be watched according to the condition of a terminal, thereby improving the usage experience of the user. In addition, the complexity of the user's operation can be reduced by determining the downloading nodes through the server.

### Embodiment two

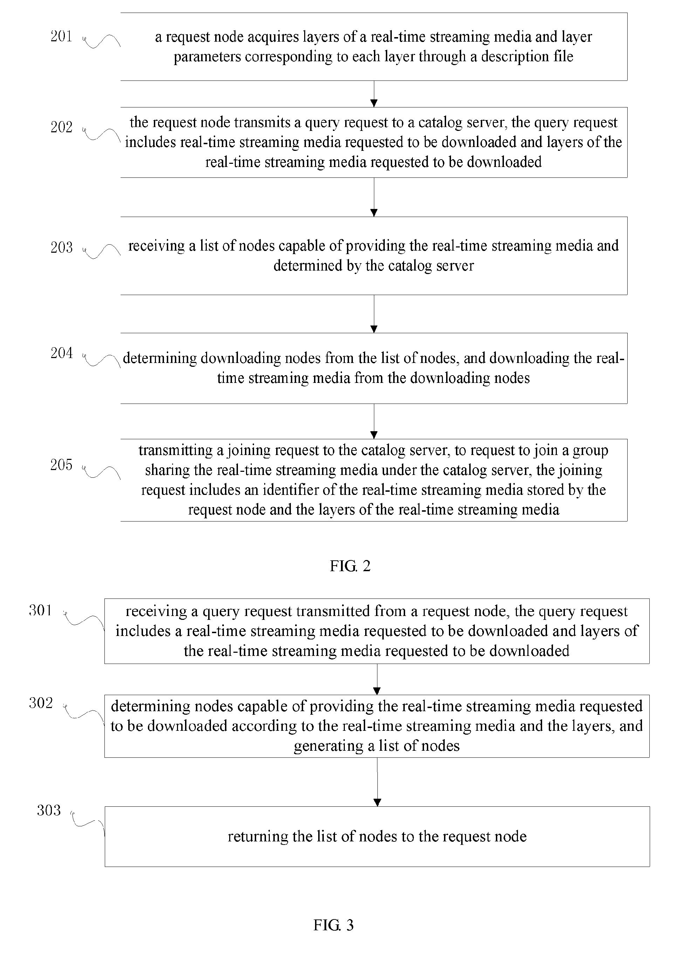

A second embodiment of the present invention provides a method for downloading real-time streaming media in a P2P network, which is implemented by improving the first embodiment, and the flow is illustrated in Fig. 2, including:
Step 201: a request node acquires layers of a real-time streaming media and layer parameters corresponding to each layer through a description file.

Wherein, the request node may acquire a description file of the real-time streaming media from an appTracker (catalog server). In one embodiment of the present invention, the appTracker may be a torrent release website, and the description file may be a file of Bittorrent with a suffix "torrent". The description file at least includes an ID of the real-time streaming media, layers of the real-time streaming media and layer parameters corresponding to each layer. In one embodiment of the present invention, the ID of the real-time streaming media may be any identifier capable of identifying the real-time streaming media, and the layer parameters may be layer 0, layer 1, ..., which correspond to multiple layers, wherein layer 0 is the bottom layer.
Step 202: the request node transmits a query request to the catalog server, the query request includes real-time streaming media requested to be downloaded and layers of the real-time streaming media requested to be downloaded.

In step 202, the request node may transmit the ID of the real-time streaming media and layer parameters of required layers, so that the catalog server acquires the real-time streaming media requested by the request node and the layers thereof.
Step 203: receiving a list of nodes capable of providing the real-time streaming media and determined by the catalog server.

Wherein, before step 203 the method may further include:
Step 2031: pre-storing downloading nodes corresponding to respective layers of the real-time streaming media in the catalog server.

For example, the catalog server stores all nodes capable of providing layer 0 corresponding to layer 0, stores all nodes capable of providing layer 1 corresponding to layer 1, and so on, so that when a node requests the real-time streaming media of a certain layer, the downloading nodes corresponding to the layer can be quickly obtained;
Step 2032: the catalog server generates a list of nodes according to the query request, and transmits the list of nodes to the request node.
Step 204: determining downloading nodes from the list of nodes, and downloading the real-time streaming media from the downloading nodes.

This step specifically includes:
Step 2041: the request node transmits a downloading request to the downloading nodes in the list of nodes, the downloading request includes at least the ID of the real-time streaming media and the layer parameters.
Step 2042: after receiving the downloading request, the downloading nodes judge whether the real-time streaming media of the layers is locally available, and return acknowledge information to the request node.
Step 2043: the request node downloads the real-time streaming media from the downloading nodes according to the acknowledge information.

For example, when the request node requests the real-time streaming media of layer 3, the real-time streaming media of layer 0, layer 1, layer 2 and layer 3 shall be obtained. The downloading nodes received by the request node are downloading node 1, downloading node 2, downloading node 3 and downloading node 4, respectively, wherein downloading node 1 locally stores layer 0 and layer 1, downloading node 2 locally stores layer 0, layer 1 and layer 2, downloading node 3 locally stores layer 0, layer 1, layer 2 and layer 3, and downloading node 4 does not locally store the real-time streaming media. Thus, through the received acknowledge information, the request node determines to download layer 0 from downloading node 1, downloading node 2 and downloading node 3, to download layer 1 from downloading node 1, downloading node 2 and downloading node 3, to download a fragment of layer 2 from downloading node 2 and downloading node 3, and download layer 3 from downloading node 3;

Further, because the receiving end in the P2P network also shares the received file, the request node shares the real-time streaming media after receiving the real-time streaming media. Thus the method further includes:
Step 205: transmitting a joining request to the catalog server, to request to join a group sharing the real-time streaming media under the catalog server, the joining request includes an identifier of the real-time streaming media stored by the request node and the layers of the real-time streaming media.

Thus, the catalog server can record the ID and the layers of the real-time streaming media requested by the request node, so as to take the request node as a downloading node when other nodes request to download the real-time streaming media.

Through the description file, the embodiment of the present invention enables the request node to acquire the real-time streaming media and the layers exist in the catalog server, so as to select an appropriate layer according to the terminal. In addition, after obtaining the real-time streaming media, the request node may join the sharing group of the catalog server as a downloading node for other nodes, thereby increasing the number of shared nodes in the network and improving availability of network sharing.

### Embodiment three

A third embodiment of the present invention provides a method for downloading real-time streaming media in a P2P network, and the flow is illustrated in Fig. 3, including:
Step 301: a catalog server receives a query request transmitted from a request node, the query request includes a real-time streaming media requested to be downloaded and layers of the real-time streaming media requested to be downloaded.
Step 302: the catalog server determines the nodes capable of providing the real-time streaming media requested to be downloaded according to the real-time streaming media and the layers, and generates a list of nodes.
Step 303: the catalog server returns the list of nodes to the request node.

In the embodiment of the present invention, the request node may transmit the requested real-time streaming media and the layers thereof to the catalog server, so that the catalog server determines the downloading nodes. Thus the P2P network can transmit the layered real-time streaming media, so as to allow a user determine the layer to be watched according to the condition of a terminal, thereby improving the usage experience of the user. In addition, the complexity of the user's operation can be reduced by determining the downloading nodes through the server.

### Embodiment four

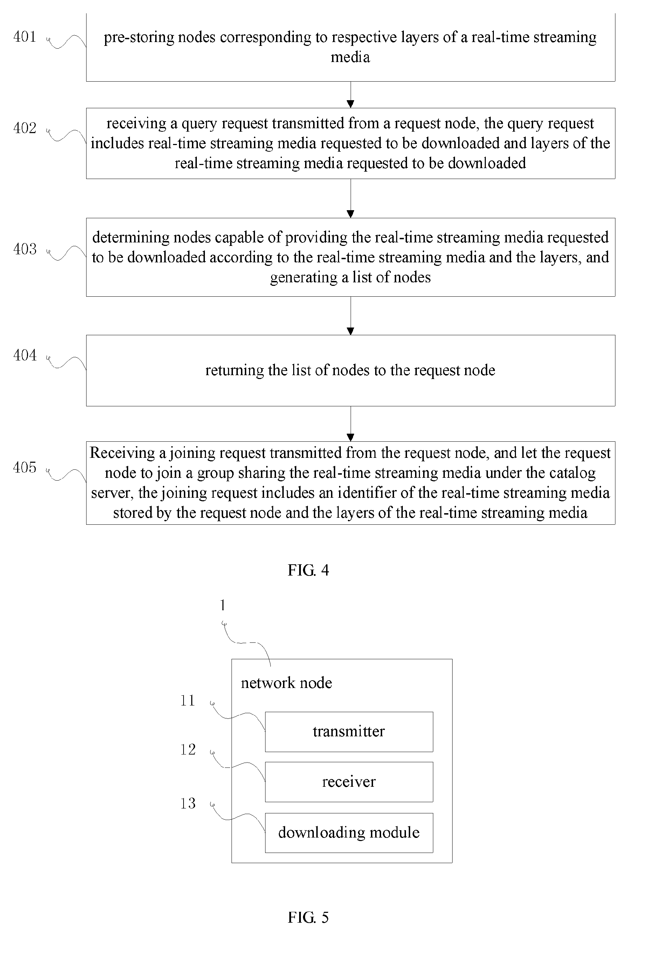

A fourth embodiment of the present invention provides a method for downloading real-time streaming media in a P2P network, which is implemented by improving the third embodiment, and the flow is illustrated in Fig. 4, including:
Step 401: a catalog server pre-stores nodes corresponding to respective layers of a real-time streaming media.

Herein the pre-storage and the functions of the following steps can be performed by not only the catalog server, but also other servers capable of performing the storage and the functions described in the following steps.
Step 402: the catalog server receives a query request transmitted from a request node, the query request includes a real-time streaming media requested to be downloaded and layers of the real-time streaming media requested to be downloaded.
Step 403: the catalog server determines nodes capable of providing the real-time streaming media requested to be downloaded according to the real-time streaming media and the layers, and generates a list of nodes.
Step 404: the catalog server returns the list of nodes to the request node.

When the request node requests to join a group sharing the streaming media content, the method further including:
Step 405: receiving a joining request transmitted from the request node, and adding the request node to a group sharing the real-time streaming media under the catalog server, the joining request includes an identifier of the real-time streaming media stored by the request node and layers of the real-time streaming media.

The embodiment of the present invention enables the catalog server to transmit to the request node a list of nodes capable of providing the real-time streaming media and layers thereof, so that the request node selects an appropriate layer according to the terminal. In addition, after acquiring the real-time streaming media, the request node may join the sharing group of the catalog server as a downloading node for other nodes, thereby increasing the number of shared nodes in the network and improving availability of network sharing.

To be noted, the downloading methods of the third embodiment and the fourth embodiment have the same design idea and principle as the downloading methods of the first embodiment and the second embodiment, thus the same portions are omitted herein. The downloading methods of the third embodiment and the fourth embodiment of the present invention may be applied to the server end, and the downloading methods of the first embodiment and the second embodiment may be applied to the network node end. Therefore, the third embodiment and the fourth embodiment may be employed in conjunction with the first embodiment and the second embodiment or separately.

### Embodiment five

A fifth embodiment of the present invention provides a network node 1 applied in a P2P network, and the structure is illustrated in Fig. 5, including:
a transmitter 11 configured to transmit a query request to a catalog server, the query request includes a real-time streaming media requested to be downloaded and layers of the real-time streaming media requested to be downloaded;
a receiver 12 configured to receive a list of nodes capable of providing the real-time streaming media and determined by the catalog server; and
a downloading module 13 configured to determine downloading nodes from the list of nodes, and download the real-time streaming media of the layers from the downloading nodes.

In the embodiment of the present invention, the network node may transmit the layers of the requested real-time streaming media to the catalog server, so that the catalog server determines the downloading nodes. Thus the P2P network can transmit the layered real-time streaming media, so as to allow a user to determine the layer to be watched according to the condition of a terminal, thereby improving the usage experience of the user. In addition, the complexity of the user's operation can be reduced by determining the downloading nodes through the server, wherein the network node may serve as the request node in the aforementioned method embodiments.

### Embodiment six

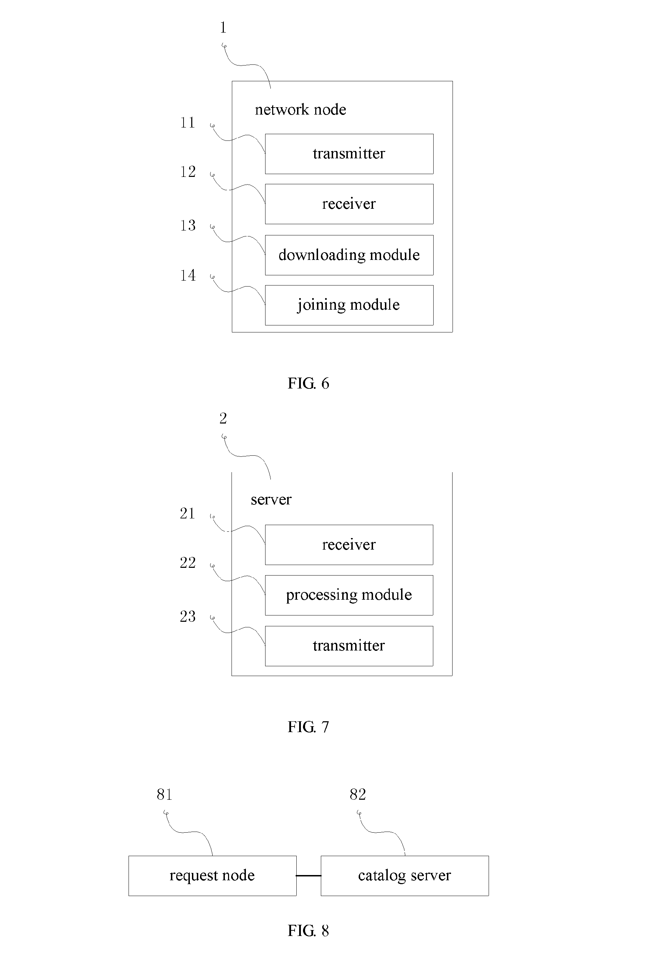

A sixth embodiment of the present invention provides a network node 1, which is implemented by improving the fifth embodiment, and the structure is illustrated in Fig. 6, including:
a transmitter 11 configured to transmit a query request to a catalog server, the query request includes a real-time streaming media requested to be downloaded and layers of the real-time streaming media requested to be downloaded;
a receiver 12 configured to receive a list of nodes capable of providing the real-time streaming media and determined by the catalog server;
a downloading module 13 configured to determine downloading nodes from the list of nodes, and download the real-time streaming media from the downloading nodes; and
a joining module 14 configured to transmit a joining request to the catalog server, to request to join a group sharing the real-time streaming media under the catalog server, the joining request includes an identifier of the real-time streaming media stored by the network node and layers of the real-time streaming media.

The embodiment of the present invention may join the sharing group of the catalog server as a downloading node for other nodes after acquiring the real-time streaming media, thereby increasing the number of shared nodes in the network and improving availability of network sharing.

To be noted, the fifth embodiment and the sixth embodiment just give examples based on the division of the above functional modules. In practical application, the above functions may be performed by different functional modules upon demand, i.e., the internal structure of the device may be divided into different functional modules to perform all or a part of the aforementioned functions. In addition, the network nodes provided by the fifth embodiment and the sixth embodiment belong to the same conception as the method for downloading real-time streaming media in a P2P network provided by the first embodiment and the second embodiment, thus the same portions are omitted herein.

### Embodiment seven

A seventh embodiment of the present invention provides a server 2 applied in a P2P network, and the structure is illustrated in Fig. 7, including:
a receiver 21 configured to receive a query request transmitted from a request node, the query request includes a real-time streaming media requested to be downloaded and layers of the real-time streaming media requested to be downloaded;
a processing module 22 configured to determine nodes capable of providing the real-time streaming media requested to be downloaded according to the real-time streaming media and the layers, and generate a list of nodes; and
a transmitter 23 configured to return the list of nodes to the request node.

In the embodiment of the present invention, the network node may transmit the layer requested by the request node to the catalog server, so that the catalog server determines the downloading nodes. Thus the P2P network can transmit the layered real-time streaming media, so that the request node determines the layer to be watched according to the condition of a terminal, thereby improving the usage experience of the user. In addition, the complexity of the user's operation can be reduced by determining the downloading nodes through the server.

Further, the server 2 may further include:
a joining response module configured to add the request node to a group sharing the real-time streaming media, when receiving a joining request transmitted from the request node, the joining request includes an identifier of the real-time streaming media stored by the network node and the layers of the real-time streaming media.

Thus the request node may join the sharing group of the catalog server as a downloading node for other nodes after acquiring the real-time streaming media, thereby increasing the number of shared nodes in the network and improving availability of network sharing.

To be noted, the seventh embodiment just gives an example based on the division of the above functional modules. In practical application, the above functions may be performed by different functional modules upon demand, i.e., the internal structure of the device may be divided into different functional modules to perform all or a part of the aforementioned functions. In addition, the server provided by the seventh embodiment belongs to the same conception as the methods for downloading real-time streaming media in a P2P network provided by the third embodiment and the fourth embodiment, thus the same portions are omitted herein. Meanwhile, the server of seventh embodiment may be employed in conjunction with the aforementioned network nodes of the fifth embodiment and the sixth embodiment.

### Embodiment eight

An eighth embodiment of the present invention provides a system for downloading real-time streaming media in a P2P network, and the structure is illustrated in Fig. 8, including:
a request node 81 configured to transmit a query request to a catalog server, the query request includes a real-time streaming media requested to be downloaded and layers of the real-time streaming media requested to be downloaded, the request node 81 is also configured to receive a list of nodes capable of providing the real-time streaming media and determined by the catalog server, determine downloading nodes from the list of nodes, and download real-time streaming media of the layers from the downloading nodes; and
the catalog server 82 configured to receive a query request transmitted from the request node, the query request includes real-time streaming media requested to be downloaded and layers of the real-time streaming media requested to be downloaded, the catalog server 82 is also configured to determine nodes capable of providing the real-time streaming media requested to be downloaded according to the real-time streaming media and the layers, generate a list of nodes, and return the list of nodes to the request node.

In the embodiment of the present invention, the request node may transmit the requested layer to the catalog server, so that the catalog server determines the downloading nodes. Thus the P2P network can transmit the layered real-time streaming media, so that the request node determines the layer to be watched according to the condition of a terminal, thereby improving the usage experience of the user. In addition, the complexity of the user's operation can be reduced by determining the downloading nodes through the server. In which, the request node may be the aforementioned network node 1, and the catalog server may be the aforementioned server 2.

Moreover, the request node 81 may be further configured to transmit a joining request to the catalog server 82, to request to join a group sharing the real-time streaming media under the catalog server 82, the joining request includes an identifier of the real-time streaming media stored by the network node and the layers of the real-time streaming media.

Correspondingly, the catalog server 82 may be further configured to add the request node 81 to the group sharing the real-time streaming media, when receiving a joining request transmitted from the request node 81, the joining request includes an identifier of the real-time streaming media stored by the network node and the layers of the real-time streaming media.

Thus the request node may join the sharing group of the catalog server as a downloading node for other nodes after acquiring the real-time streaming media, thereby increasing the number of shared nodes in the network and improving availability of network sharing.

The request node provided by the eighth embodiment belongs to the same conception as the methods for downloading real-time streaming media in a P2P network provided by the first embodiment and the second embodiment, while the server provided by the eighth embodiment belongs to the same conception as the methods for downloading real-time streaming media in a P2P network provided by the third embodiment and the fourth embodiment, thus the same portions are omitted herein.

A person skilled in the art will appreciate that all or a part of steps for implementing the above method embodiments may be performed by hardware related to program instructions that may be stored in a computer readable storage medium, and when being executed, the program instructions perform the steps including the above method embodiments. The storage medium may include various mediums capable of storing program codes, such as ROM, RAM, magnetic disk and optical disk.

The above descriptions are just preferred embodiments of the present invention rather than limitation to the present invention. Any modification, equivalent replacement, improvement, etc. under the spirit and principle of the present invention shall fall within the protection scope of the present invention.

## Claims

1. A method for downloading real-time streaming media in a peer-to-peer (P2P) network, comprising:
transmitting a query request to a catalog server, the query request comprises a real-time streaming media requested to be downloaded and layers of the real-time streaming media requested to be downloaded;
receiving a list of nodes capable of providing the real-time streaming media and determined by the catalog server; and
determining downloading nodes from the list of nodes, and downloading real-time streaming media of the layers from the downloading nodes.

2. The method for downloading real-time streaming media in a P2P network according to claim 1, wherein determining downloading nodes from the list of nodes, and downloading real-time streaming media of the layers from the downloading nodes comprises:
transmitting a downloading request to the downloading nodes, the downloading request comprises the real-time streaming media requested to be downloaded and the layers of the real-time streaming media; and
downloading the real-time streaming media of the layers after receiving acknowledge responses from the downloading nodes.

3. The method for downloading real-time streaming media in a P2P network according to claim 1 or 2, wherein the method further comprising:
transmitting a joining request to the catalog server, to request to join a group sharing the real-time streaming media under the catalog server, the joining request comprises an identifier of the real-time streaming media stored and the layers of the real-time streaming media.

4. A method for downloading real-time streaming media in a peer-to-peer (P2P) network, comprising:
receiving a query request transmitted from a request node, the query request comprises a real-time streaming media requested to be downloaded and layers of the real-time streaming media requested to be downloaded;
determining nodes capable of providing the real-time streaming media requested to be downloaded according to the real-time streaming media and the layers, and generating a list of nodes; and
returning the list of nodes to the request node.

5. The method for downloading real-time streaming media in a P2P network according to claim 4, wherein the method further comprising:
pre-storing the nodes corresponding to respective layers of the real-time streaming media.

6. The method for downloading real-time streaming media in a P2P network according to claim 4 or 5, wherein the method further comprising:
receiving a joining request transmitted from the request node, and adding the request node to a group sharing the real-time streaming media under the catalog server, the joining request comprises an identifier of the real-time streaming media stored by the request node and the layers of the real-time streaming media.

7. A network node applied in a peer-to-peer (P2P) network, comprising:
a transmitter configured to transmit a query request to a catalog server, the query request comprises a real-time streaming media requested to be downloaded and layers of the real-time streaming media requested to be downloaded;
a receiver configured to receive a list of nodes capable of providing the real-time streaming media and determined by the catalog server; and
a downloading module configured to determine downloading nodes from the list of nodes, and download the real-time streaming media of the layers from the downloading nodes.

8. The network node according to claim 7, further comprising:
a joining module configured to transmit a joining request to the catalog server, to request to join a group sharing the real-time streaming media under the catalog server, the joining request comprises an identifier of the real-time streaming media stored by the network node and the layers of the real-time streaming media.

9. A server applied in a peer-to-peer (P2P) network, comprising:
a receiver configured to receive a query request transmitted from a request node, the query request comprises a real-time streaming media requested to be downloaded and layers of the real-time streaming media requested to be downloaded;
a processing module configured to determine nodes capable of providing the real-time streaming media requested to be downloaded according to the real-time streaming media and the layers, and generate a list of nodes; and
a transmitter configured to return the list of nodes to the request node.

10. The server according to claim 9, further comprising:
a joining response module configured to add the request node to a group sharing the real-time streaming media, when receiving a joining request transmitted from the request node, the joining request comprises an identifier of the real-time streaming media stored by the request node and the layers of the real-time streaming media.

11. A system for downloading real-time streaming media in a peer-to-peer (P2P) network, comprising:
a request node configured to transmit a query request to a catalog server, the query request comprises a real-time streaming media requested to be downloaded and layers of the real-time streaming media requested to be downloaded, receive a list of nodes capable of providing the real-time streaming media and determined by the catalog server, determine downloading nodes from the list of nodes, and download real-time streaming media of the layers from the downloading nodes; and
the catalog server configured to receive a query request transmitted from the request node, the query request comprises real-time streaming media requested to be downloaded and layers of the real-time streaming media requested to be downloaded, determine nodes capable of providing the real-time streaming media requested to be downloaded according to the real-time streaming media and the layers, generate a list of nodes, and return the list of nodes to the request node.

12. The system for downloading real-time streaming media in a P2P network according to claim 11, wherein the request node comprises the network node according to claim 7 or 8.

13. The system for downloading real-time streaming media in a P2P network according to claim 11 or 12, wherein the server comprises the server according to claim 9 or 10.
